# EUROPÄISCHE PATENTSCHRIFT

(11) **EP 2 563 881 B1**
(45) Veröffentlichungstag und Bekanntmachung des Hinweises auf die Patenterteilung: **02.10.2019**
(21) Anmeldenummer: 11716409.5
(22) Anmeldetag: 26.04.2011
(51) Int. Cl.: C10J 3/66, C10J 3/30, C10J 3/72, C10J 3/10, C10B 47/44, C10J 3/80, C10B 53/02

(54) **VERFAHREN ZUR VERGASUNG VON BIOMASSE**
METHOD FOR GASIFYING BIOMASS
PROCÉDÉ POUR LA GAZÉIFICATION DE LA BIOMASSE

(30) Priorität: 26.04.2010 DE 102010018197
(43) Veröffentlichungstag der Anmeldung: 06.03.2013
(73) Patentinhaber: Stadtwerke Rosenheim GmbH & Co. KG, 83022 Rosenheim (DE)
(72) Erfinder: EGELER, Reinhold, 83064 Raubling (DE); SEWALD, Wolfgang, 83026 Rosenheim (DE); WALLER, Rolf, 85567 Grafing (DE); ARTMANN, Klaus, 83064 Raubling (DE)
(74) Vertreter: Gritschneder, Sebastian
(86) Internationale Anmeldenummer: PCT/EP2011/056586
(87) Internationale Veröffentlichungsnummer: WO 2011/134961

(56) Entgegenhaltungen:
- EP-A2- 0 136 255
- WO-A2-2009/060461
- DE-A1-102004 030 368
- DE-A1-102006 059 485
- DE-A1-102008 026 252

## Beschreibung

Die Erfindung betrifft ein Verfahren zur Vergasung von Biomasse, wobei das Rohmaterial über eine Zuführeinrichtung in einen Vergasungsreaktor gefördert wird, wobei im Vergasungsreaktor eine Pyrolyseeinheit, eine Oxidationseinheit und eine Reduktionseinheit direkt aneinander angrenzend, das heißt unmittelbar aufeinanderfolgend, angeordnet sind, wobei das Rohmaterial in der Pyrolyseeinheit ausgegast und in die Pyrolyseprodukte umgewandelt wird, wobei die Pyrolyseprodukte in der Oxidationseinheit, unter Zuführung eines Vergasungsmittels teilweise verbrannt werden, wobei die Oxidationsprodukte in der Reduktionseinheit in Produktgas umgewandelt werden und wobei das Produktgas über eine Ableitung aus dem Vergasungsreaktor abgeführt wird.

Die Biomassevergasung ist ein Prozess, bei dem feste Biomasse in ein Produkt- oder Brenngas umgewandelt wird. Dabei wird die Biomasse zunächst in einer Pyrolysezone unter Luftabschluss bzw. unter weitgehendem Luftmangel erhitzt. Die Biomasse wird unter Abgabe von Pyrolysegas, einem Gemisch aus Kohlenmonoxid, Wasserstoff, Kohlendioxid und Dämpfen aus höheren Kohlenwasserstoffen, in Kohle umgewandelt. Anschließend werden diese Pyrolyseprodukte in einer Oxidationszone unter Zuführung eines Vergasungsmittels, z.B. Luft, Sauerstoff, mit Sauerstoff angereicherter Luft, oder Wasserdampf, teilweise verbrannt, wobei die höheren (langkettigen) Kohlenwasserstoffe, die bei der Pyrolyse entstehen, gecrackt werden. An den Oxidationsvorgang schließt sich die Reduktion an, in der die Oxidationsprodukte mit der Kohle reagieren und soweit thermodynamisch möglich in Kohlenmonoxid und Wasserstoff, umgewandelt werden.

Als Rohstoffe für die Biomassevergasung kommen vor allem Agrarrohstoffe, wie Holz, Getreide oder Maisstroh in Form von Hackgut oder gepresst als Pellets, trockene organische Abfälle aus Industrie und Haushalt sowie Strauchschnitt oder Straßenbegleitgrün aus der Landschaftpflege oder dem Gartenbau in Betracht.

Aus der WO 2008/110383 ist ein Biomassevergaser mit einem mehrstufigen Aufbau bekannt. Dieser umfasst eine Pyrolyseeinheit, eine Oxidationseinheit und eine Reduktionseinheit. Die Pyrolyseeinheit ist im Wesentlichen ein senkrecht stehender Reaktor, durch den das Rohmaterial mittels einer senkrechten Steigschnecke gefördert wird. Die für die Pyrolyse benötigte Wärme von 200°C bis 700°C wird durch heiße Gase, die über eine Düse in die Pyrolyseeinheit geleitet werden, zugeführt. Über einen Auswurf gelangt das Material von der Pyrolyseeinheit in die Oxidationseinheit. In der Oxidationseinheit wird das Material unter Zugabe eines Vergasungsmittels bei Temperaturen im Bereich von 800°C bis 2000°C oxidiert. Die Oxidationseinheit ist dabei so konzipiert, dass sie als Transporteinheit für die Kohle aus der Pyrolyse dient. Aus der Oxidationseinheit gelangt das Material in eine sich trompetenförmig öffnende Reduktionseinheit. Die Reduktionseinheit ist dabei so ausgebildet, dass sich darin ein schwebendes Feststoffbett ausbildet. Am Gasausgang der Reduktionseinheit wird das Produktgas abgeführt, das anschließend gekühlt, gereinigt und auf beliebige Weise weiterverwertet werden kann. Die bei der Abkühlung gewonnene Energie kann in das System, z.B. zur Trocknung des zu vergasenden Materials, zurückgeführt werden.

Aus der DE 10 2006 059 485 ist ein Holzvergaser zur Vergasung von Waldhackschnitzeln bekannt. Der darin beschriebene Reaktor weist eine Pyrolyse-, eine Oxidations- und eine Reduktionseinheit auf, die direkt aneinander angrenzen. Der Reaktor ist dabei doppelwandig ausgeführt. Die Vergasung findet in einem inneren Behälter des Reaktors statt. Die heißen Gase und Ascherückstände werden an der Oberseite aus dem inneren Behälter des Reaktors herausgedrückt und werden anschließend in dem durch die Doppelwand des Reaktors gebildeten Zwischenraum an der Außenwand des Innenbehälters vorbeigeführt. Dabei wird die Wärmeenergie an den Reaktor zurückgeführt. Die Asche wird in einen Ascheauffangbereich am unteren Ende des Reaktors gesammelt. Die bei der Pyrolyse gewonnenen brennbaren Gase werden anschließend einem Blockheizkraftwerk (BHKW) zur Stromgewinnung zugeführt. Das Rohmaterial wird über eine waagrechte Förderschnecke, die von einer doppelwandigen Zuführleitung umgeben ist, in den Reaktor gefördert. Zur optimalen Energieausnutzung können die heißen Abgase des BHKW durch die die Förderschnecke umgebende Zuführleitung geführt werden, um das Rohmaterial vorzutrocknen. Auch die für die Oxidation benötigte Luft kann in gleicher Weise über die Luftzuführleitung vorgewärmt werden.

Die DE 10 2004 030 368 A1 und die WO 2009/060461 A2 beschreiben jeweils Verfahren der Pyrolyse mit darauffolgender Vergasung, wobei die Energie für die Pyrolyse aus dem Vergasungsgas per Wärmeübertragung gewonnen wird.

In herkömmlichen Biomassevergasern ist die Pyrolyse meist unvollständig, das heißt die vollständige Vergasung des Materials erfolgt erst in der Oxidations- oder der Reduktionseinheit. Langkettige Moleküle, die erst in der Reduktionseinheit freigesetzt werden, können aufgrund der niedrigeren Temperaturen in der Reduktionszone jedoch nur noch unzureichend aufgespaltet werden. Eine vollständige Reduktion der Pyrolyseprodukte in Produktgas ist deswegen nicht mehr möglich.

Herkömmliche Biomassevergaser haben daher den Nachteil, dass ihr Produktgas in hohem Maße kondensierbare Kohlenwasserstoffe, sogenannten Teer, enthält. Mit dem Begriff Teer werden dabei Kohlenwasserstoffverbindungen bezeichnet, die mehr als fünf Kohlenstoffatome aufweisen. Dieser Teer schränkt die Nutzbarkeit in Motoren und vor allem Brennstoffzellen erheblich ein.

Darüber hinaus sind herkömmliche Biomassevergaser nur für einen gleichmäßigen Dauerbetrieb geeignet. Bei Leistungsschwankungen oder Teillast können die Reaktionsbedingungen nicht konstant gehalten werden, so dass ebenfalls die Gasqualität und die Nutzbarkeit des Gases stark eingeschränkt oder sogar unmöglich wird.

Aufgabe der vorliegenden Erfindung ist es daher, ein entsprechendes Verfahren bereitzustellen, das eine effizientere Umwandlung der Biomasse in ein teerfreies Produktgas ermöglicht.

Erfindungsgemäß wird diese Aufgabe bei einem Verfahren der eingangs genannten Art dadurch gelöst, dass das Rohmaterial in der Pyrolyseeinheit vollständig ausgegast und vollständig in eine Feststoffphase, bestehend aus Kohlenstoff, und eine Gas-/Dampfphase, bestehend aus Permanentgasen (CO, CO₂, H₂, CH₄) und kondensierbarem Wasserdampf und Kohlenwasserstoffdämpfen, aufgetrennt wird.

Ein durch die Erfindung erzielbarer Vorteil ist, dass die Leistung des Biomassevergasers bei gleichbleibender Gasqualität einstellbar ist. Dies bedeutet, dass die Menge des produzierten Produktgases gezielt einstellbar ist, und dabei unabhängig vom Produktgasumsatz immer eine gleichbleibende Qualität und Zusammensetzung des Produktgases gewährleistet ist.

Ein weiterer Vorteil der vorliegenden Erfindung ist, dass das Produktgas hinsichtlich seiner Gasqualität uneingeschränkt in Motoren oder sogar in Brennstoffzellen nutzbar ist, wobei der Biomassevergaser ohne Einschränkungen in der Produktgasqualität in weiten Leistungsbereichen regelbar ist.

Der nicht erfindungsgemäße Biomassevergaser umfasst ein Zuführsystem für das Rohmaterial (Biomasse), eine Pyrolyseeinheit, eine Oxidationseinheit, eine Reduktionseinheit und eine Ableitung für das Produktgas. Die Pyrolyseeinheit, die Oxidationseinheit und die Reduktionseinheit sind dabei direkt aneinander angrenzend in einem Vergasungsreaktor angeordnet. Vorzugsweise ist der Vergasungsreaktor zylinderförmig ausgeführt und senkrecht orientiert, wobei die Pyrolyseeinheit, die Oxidationseinheit und die Reduktionseinheit in dieser Reihenfolge von unten nach oben im Vergasungsreaktor angeordnet sind. Der Vergasungsreaktor kann aber auch geneigt unter einem beliebigen Winkel gegenüber der Horizontalen angeordnet sein.

Das Zuführsystem umfasst einen Vorlagebehälter, dem das Rohmaterial aufgegeben wird. Aus dem Vorlagebehälter gelangt das Rohmaterial unter Abdichtung gegenüber der Außenluft auf eine erste Förderschnecke, die von einem ersten Motor angetrieben wird. Die erste Förderschnecke fördert das Rohmaterial in den Vergasungsreaktor. Eine zweite Förderschnecke, auch Pyrolyseschnecke genannt, fördert das Rohmaterial durch die Pyrolyseeinheit. Wenn der Vergasungsreaktor geneigt ausgeführt ist, kann das Rohmaterial aus dem Vorlagebehälter auch direkt der Pyrolyseschnecke aufgegeben werden. Eine weitere Förderschnecke wird bei dieser Ausführungsform nicht benötigt. Bei dieser Ausführungsform mit einer einzigen Förderschnecke kann insbesondere die zylinderförmige Pyrolyseeinheit unter einem Winkel zwischen 20° und 75°, vorzugsweise etwa 45°, zur Horizontalen geneigt sein, während die Oxidationseinheit und die Reduktionseinheit vertikal ausgerichtet sind.

Die verwendeten Förderschnecken sind bevorzugt als Hohlschnecken ausgeführt.

Um eine vollständige Pyrolyse der Rohmaterialien in der Pyrolyseeinheit zu erreichen, muss eine ausreichende Verweilzeit des Rohmaterials bei einer ausreichend hohen Temperatur in der Pyrolyseeinheit gewährleistet werden. Die Verweilzeit hängt von der Länge und dem Querschnitt der Pyrolyseeinrichtung ab und ist über die Fördergeschwindigkeit der Pyrolyseschnecke steuerbar. Die für die Pyrolyse benötigte Wärmeenergie wird dem heißen Produktgas entnommen. Die benötigte Verweilzeit wird von der Art und Beschaffenheit des Rohmaterials bestimmt.

Anstatt die gesamte Rohstoffmenge über eine einzige Pyrolyseschnecke zu fördern, können auch mehrere Pyrolyseschnecken parallel betrieben werden. Die mehreren Pyrolyseschnecken können zum Beispiel sternförmig um die Oxidationseinheit angeordnet sein, und fördern jeweils das Rohmaterial in die Oxidationseinheit. Der Einsatz mehrerer Pyrolyseschnecken ist insbesondere dann sinnvoll, wenn aufgrund der benötigten Menge des Rohmaterials dessen vollständige Pyrolyse innerhalb einer einzigen Pyrolyseschnecke nicht mehr gewährleistet werden kann.
Am oberen Ende der Pyrolyseschnecke wird das Material in die Oxidationseinheit gefördert. Im Bereich der Oxidationseinheit befinden sich auf mehreren Ebenen in der Wand des Vergasungsreaktors Öffnungen, über die das Vergasungsmittel zugeführt werden kann. Um die Temperatur in der Oxidationseinheit zu begrenzen, kann die Vergasungsmittelzufuhr über Luftklappen reduziert werden. Durch die Begrenzung der Temperatur wird der eingesetzte Werkstoff geschont und kann eine Verschlackung der Asche in der Oxidationseinheit vermieden werden.

Von der Oxidationseinheit gelangt das Material direkt in die Reduktionseinheit. Die Reduktionseinheit ist konisch ausgeführt und so geformt, dass sich ein schwebendes Festbett ausbildet. Durch die zugeführte Luft, sowie durch die Verbrennungsgase entsteht eine starke Strömung, die je nach Strömungsgeschwindigkeit in der konischen Reduktionseinheit zu einem Schwebebett, einem stationären Wirbelbett oder auch zu einem reinen Wirbelbett führt. Durch die Aufweitung des Querschnitts im oberen Bereich der Reduktionseinheit wird die Geschwindigkeit der Gase dabei soweit reduziert, dass möglichst wenig Holzkohle aus dem System ausgetragen wird. Leichtere Aschepartikel strömen dagegen mit dem Produktgas ab und können z.B. über einen Staubabscheider im weiteren Verfahrensablauf abgeschieden werden. Durch den konischen Querschnitt passt sich das System selbständig an unterschiedliche Leistungen (=Gasgeschwindigkeiten) an. Die Aufweitung des Durchmessers der Reduktionseinheit muss so gewählt werden, dass nur die Aschepartikel, aber keine Holzkohle durch den Luftstrom ausgetragen wird. Je nach Dimensionierung der Anlage kann der Durchmesser der Reduktionseinheit dabei um das Zwei- bis Sechsfache, vorzugsweise um etwa das Vierfache, aufgeweitet werden.

Bevorzugter Weise bildet sich in der Reduktionszone ein Wirbelbett aus. Das Wirbelbett enthält Kohle aus der Pyrolyse, Pyrolysegase und Vergasungsmittel und wird durch die Vergasungsmittelzufuhr in die Oxidationszone gebildet. In dem Wirbelbett bewegen sich die Kohlestücke relativ zueinander, wodurch es zu einer zusätzlichen abrasiven Zerkleinerung der Feststoffpartikel kommt. Dadurch wird die Oberfläche der Feststoffpartikel weiter erhöht, so dass die Redoxprozesse weiter beschleunigt werden.

Dadurch dass beim Übergang von der Pyrolysezone in die Oxidations-/Reduktionszone durch das Einströmen des Vergasungsmittels direkt ein Wirbelbett erzeugt wird, kann eine Verdichtung des Rohmaterials vermieden und eine Schlackebildung duch u. a. durch Agglomeration in der Oxidations-/Reduktionszone reduziert werden.

Das von dem Biomassevergaser erzeugte Produktgas wird anschließend über eine Ableitung aus dem Vergasungsreaktor herausgeführt.

Durch die vollständige Ausgasung des Rohmaterials in der Pyrolysezone ist sichergestellt, dass alle langkettigen Moleküle beim Übergang in die heiße Oxidationszone bereits in gas-/dampfförmigem Zustand vorliegen und dann in der Oxidationszone aufgespaltet (gecrackt) werden können. Dies ist ein entscheidender Vorteil gegenüber konventionellen Vergasungsanlagen, in denen oft ein erheblicher Anteil langkettiger Kohlenwasserstoffe erst im Bereich der Oxidationszone oder sogar erst im Bereich der Reduktionszone freigesetzt wird, wo sie dann aufgrund der kürzeren Verweilzeiten oder aufgrund der dort herrschenden niedrigeren Temperaturen nicht mehr vollständig umgewandelt werden können.

Dadurch, dass bereits vor der Oxidationszone eine vollständige Ausgasung des Rohmaterials erfolgt, sind zum Cracken der langkettigen Kohlenwasserstoffe nur noch Gasphasenreaktionen erforderlich. Diese Gasphasenreaktionen werden zudem katalytisch durch den bei der Pyrolyse entstandenen Kohlenstoff unterstützt.

Die Pyrolyse des Rohmaterials findet bei einer Temperatur im Bereich von 550°C bis 800°C, vorzugsweise im Bereich von 650°C bis 750°C, statt.

Das Produktgas wird zumindest teilweise zur Erhitzung des Rohmaterials in der Pyrolyseeinheit eingesetzt. Vorzugsweise wird die für die Pyrolyse benötigte Wärmeenergie dem heißen Produktgas entnommen. Dazu kann zum Beispiel der Mantel des Vergasungsreaktors im Bereich der Pyrolysezone doppelwandig ausgeführt sein und das heiße Produktgas durch den doppelwandigen Mantel geleitet werden. Zur stofflichen Entkopplung kann die Wärmeenergie des Produktgases auch über einen Wärmetauscher an die Pyrolyseeinheit übertragen werden. Durch die Rückführung der Wärmeenergie des Produktgases in den Vergasungsreaktor kann die Biomasse-Vergasungsvorrichtung besonders effizient betrieben werden. Das Produktgas kann Temperaturen zwischen 600°C und 900°C aufweisen und wird direkt nach dem es die Oxidations-/Reduktoinszone verlassen hat, durch den doppelwandigen Mantel der Pyrolyseeinheit geleitet. Typischerweise weist das Produktgas am Eingang des Mantels der Pyrolyseeinheit eine Temperatur von zwischen 600°C und 900°C, vorzugsweise etwa 800°C auf und am Ausgang des Mantels der Pyrolyseeinheit eine Temperatur von unter 600°C, vorzugsweise etwa 400°C auf.

Durch diese vorteilhafte Konzeption wird ein Teil der Abwärme aus dem Vergasungsprozess über die Biomasse wieder in den Prozess zurückgeführt. Der Vorteil liegt dabei darin, dass durch diese Wärmerückführung weniger Produktgas teilverbrannt werden muss um die für die Reduktionsreaktionen nowendigen Mindesttemperaturen im Bereich von 900 bis 950 °C zu erreichen. Durch diese Rückführung ist es daher möglich, ein Produktgas mit höherem Heizwert zu erzeugen, als dies mit Vergasern der bekannten Bauart möglich ist.

Vorzugsweise ist die Produktgasleitung mit einer Bypassleitung versehen, über die ein Teil des heißen Produktgases direkt, also ohne vorherige Wärmeabgabe an die Pyrolyseeinheit, an den Produktgasausgang gefördert werden kann. Die Bypassleitung ermöglicht es, die Wärmemenge, die an die Pyrolyseeinheit abgegeben werden soll, zur Temperatursteuerung exakt zu wählen.

Die Bypassleitung bietet den weiteren Vorteil, dass der Biomassevergaser schneller heruntergefahren werden kann, da die Wärmezufuhr in die Pyrolyseeinheit kontrolliert gesteuert werden kann.

Die Regelung der Leistung des Biomassevergasers erfolgt über die Steuerung der Zufuhr des Vergasungsmittels und des Rohmaterials. Die Zufuhr des Vergasungsmittels wird dabei indirekt durch die Erzeugung eines Unterdrucks in der Reduktionszone gesteuert. Zur Erzeugung dieses Unterdrucks kann eine Absaugeinrichtung, z. B. ein Saugzug oder ein Saugmotor, vorgesehen sein, der eine einstellbare Menge an Produktgas aus der Reduktionszone abzieht. Zum Ausgleich dieses Unterdrucks wird eine entsprechende Menge des Vergasungsmittels in die Oxidationszone gesaugt. Typischerweise beträgt das Volumen des zugeführten Vergasungsmittels etwas weniger als die Hälfte des abgezogenen Produktgases. Über Klappen in der Vergasungsmittelzufuhr kann das Vergasungsmittel dosiert werden und dadurch die Temperatur gesteuert werden.

Vorzugsweise erfolgt die Steuerung des Biomassevergasers durch die für die gewünschte Leistung des nachgeschaltenen BHKW notwendige Zufuhr des Rohmaterials. Dabei wird zunächst über die Absaugeinrichtung die Menge an Produktgas gewählt, d.h. die Absaugeinrichtung wird so eingestellt, dass sie eine vorbestimmte Menge an Produktgas aus der Reduktionszone abzieht. Die Zufuhr des Vergasungsmittels wird dabei nicht aktiv gesteuert. Die Menge an zugeführtem Vergasungsmittel ergibt sich aus dem durch die Absaugeinrichtung erzeugten Unterdruck in der Oxidations-/Reduktionszone und dem Öffnungsquerschnitt der Einströmdüsen in Verbindung mit der entsprechend geregelten Zufuhr an zu vergasender Biomasse. Das Volumen des zugeführten Vergasungsmittels beträgt dabei etwas weniger als die Hälfte des abgezogenen Produktgases. Entsprechend der Menge des Vergasungsmittels und des entstehenden Produktgases ist eine bestimmte Menge an Biomasse erforderlich.

Die Zufuhr der Biomasse erfolgt, wie oben beschrieben, über eine oder zwei Förderschnecken, wobei die einzige oder die zweite Förderschnecke die sogenannte Pyrolyseschnecke ist. Alternativ kann die Biomassezufuhr auch über mehrere parallele Zufuhrstrecken erfolgen. Über die Drehzahl der Schnecken kann die Zufuhrmenge an Rohmaterial verändert werden. Ist die Rohmaterialmenge dabei zu groß, dass heißt größer als sie im Prozess zu Kohle und dann im Reduktionsbereich zum Produktgas umgewandelt werden kann, kommt es zu einer Überfüllung und Verstopfung des Reduktionsbereiches. Ist die zugeführte Rohmaterialmenge zu gering, nimmt der Kohlegehalt in der Reduktionszone immer mehr ab, bis die Reduktionszone komplett verschwindet und nur noch eine Oxidationszone vorhanden ist. Es kommt zu einem Durchbrand. Dabei wird kein Produktgas mehr erzeugt, sondern ein Stickstoff-Kohlendioxid-Gemisch mit im Vergleich zum Produktgas deutlich geringeren Wasserstoff- und Kohlenmonoxidanteilen, ähnlich wie bei einer unvollständigen Verbrennung.

Vorzugsweise wird der Vergasungsprozess in Abhängigkeit vom Methangehalt im Produktgas geregelt. Der Methangehalt des Produktgases sollte dabei einen Wert im Bereich von 2,5 % bis 3,5 %, vorzugsweise 2,8 % bis 3,2 %, und noch bevorzugter etwa 3 % des Produktgases betragen. Ein abnehmender Methangehalt ist ein erster Indikator für einen Rückgang der Reduktionszone bzw. einen drohenden Durchbrand. Dagegen weist ein steigender Methanwert auf eine steigende Kohlemenge in der Reduktionszone mit Tendenz zur Überfüllung des Reduktionsbereiches hin. Die Regelung erfolgt dabei so, dass zunächst ein gewünschter konstanter Produktgasdurchsatz festgelegt wird und anschließend die Zufuhr des Rohmaterials in Abhängigkeit des gemessenen Methangehalts des Produktgases geregelt wird.

Anstelle des Methangehaltes kann zur Regelung auch der Kohledioxidgehalt im Produktgas verwendet werden. Wie beim Methan ist ein abnehmender Kohlendioxidgehalt ein erster Hinweis auf eine Verringerung der Reduktion bzw. einem drohenden Durchbrand. Der Kohlendioxidgehalt, der für die Regelung als Sollwert vorgegeben wird, liegt vorzugsweise im Bereich von 10 bis 12%. Die Höhe des Wertes ist dabei abhängig vom Feuchtegehalt der Biomasse. Bei Biomasse mit höherer Feuchte wird ein etwas höherer CO₂-Gehalt eingestellt, bei trockener Biomasse (z. B. >10% Feuchte) wird ein niedrigerer CO₂-Gehalt geregelt.

Über die Absaugeinrichtung ist einstellbar, welche Menge an Produktgas produziert werden soll. Die Produktionsleistung ist dabei frei einstellbar und kann zwischen 30 und 120 % der nominellen Leistung des Biomassevergasers betragen. Bei der vorgegebenen Saugleistung wird die Zufuhr der Biomasse dann derart geregelt, dass sich ein Methangehalt von etwa 3% im Produktgas oder ein CO₂-Gehalt von etwa 11% einstellt. Ist der Methangehalt (oder CO₂-Gehalt) des Produktgases zu hoch, so befindet sich zu viel Rohmaterial in der Oxidations-/Reduktionszone und die Temperatur in der Oxidationszone ist zu niedrig. In diesem Fall wird die Biomassezufuhr über die Förderschnecke in die Oxidationszone gedrosselt. Ist der Methangehalt (oder CO₂-Gehalt) des Produktgases zu niedrig, so befindet sich zu wenig Rohmaterial in der Oxidations-/Reduktionszone und die Temperatur in der Oxidationszone ist zu hoch. In diesem Fall wird die Biomassezufuhr über die Förderschnecke in die Oxidationszone erhöht. Statt des Methangehalts kann auch auf andere Bestandteile, z.B. auf H₂ oder CO, des Produktgases geregelt werden.

Durch diese Art der Regelung kann der optimale Betriebspunkt des Prozesses eingestellt werden.

Insbesondere durch die direkte Wärmerückführung des Produktgases über die Produktgasleitung in die doppelwandig ausgeführte Pyrolyseeinheit ist es möglich, die für eine vollständige Pyrolyse benötigte Wärmemenge effizient bereitzustellen. Die Wärmerückführung bietet zudem den weiteren Vorteil, dass das Rohmaterial am Übergang der Pyrolysezone in die Oxidations-/Reduktionszone bereits eine Temperatur von bis zu 750°C aufweist. Daher wird nur noch eine vergleichsweise geringe Wärmemenge benötigt, um das Rohmaterial in der Oxidations-/Reduktionszone auf die benötigte Temperatur von etwa 900-1100°C zu erhitzen. Die dazu nötige Wärmeenergie wird durch die Oxidation eines geringen Teils der brennbaren Gase mittels Zuführung des Vergasungsmittels bereitgestellt. Die Verbrennung erfolgt dabei bei einem Lambda-Wert von λ < 0,5, vorzugsweise bei einem Lambda-Wert von λ = 0,1 bis 0,3 und noch vorzugsweise bei einem Lambda-Wert von λ = 0,15 bis 0,25, bevorzugt bei einem Lambda-Wert von λ = 0,2. Diese Wärmerückführung hat den Vorteil, dass ein geringerer Teil der brennbaren Gase zum Erreichen der notwendigen Reaktionstemperaturen verbrannt werden muss und so ein größerer Anteil des Produktgases erhalten bleibt und das produzierte Produktgas daher einen höheren Heizwert aufweist.

Die Wärmerückführung erhöht zudem den Kaltgaswirkungsgrad (KGW) des Produktgases. Der KGW ist der Quotient aus dem chemisch gebundenen Energieinhalt des Produktgases und dem mit der Biomasse zugeführten Energie in Form von Heizwert der Biomasse mal Massenstrom.. Dadurch dass das Rohmaterial beim Übergang in die Oxidationszone bereits eine sehr hohe Temperatur von bis zu 750°C aufweist, wird nur noch wenig zusätzliche Wärmeenergie in der Oxidations-/Reduktionszone benötigt, um den erforderlichen Temperaturbereich von 900-1100°C zu erreichen.

Die Temperatur in der Oxidations-/Reduktionszone wird überwacht. Um das Material zu schonen ist es erstrebenswert die Temperatur in der Oxidations-/Reduktionszone zu begrenzen. Zum Beispiel kann ein Begrenzungssystem vorgesehen sein, dass den Biomassevergaser herunterfährt, wenn die Temperatur in der Oxidations-/Reduktionszone einen gewissen vorgegebenen Grenzwert überschreitet.

Ein Lambdawert von unter λ = 0,2 kann unter anderem durch Vorwärmung des Vergasungsmittels, z.B. Luft, unter Ausnutzung der Restwärme des Produktgases erzielt werden.

Der Methangehalt und der Kohlendioxidgehalt des Produktgases sind Parameter, die sehr schnell auf Veränderungen der Betriebsbedingungen reagieren. Sie eignen sich daher besonders als Regelgröße für die Biomassevergasung. Hochwertiges Produktgas hat eine Zusammensetzung von etwa 22% CO, 20% H₂, 10% CO₂, etwa 3% Methan, 10% Wasserdampf; der Restbesteht aus N₂. Durch die Regelung der Biomassevergasung auf den Methangehalt oder den Kohlendioxidgehalt des Produktgases, wird eine gleichmäßige Gaszusammensetzung erreicht, wodurch wiederum ein kontinuierlicher Betrieb des Biomassevergasers gewährleistet ist.

Die Regelung kann mit einer üblichen Regelelektronik bewerkstelligt werden, deren Regelgröße der Messwert des Methangehalts des Produktgases darstellt. Da zur Prozesskontrolle und Beurteilung der Prozessgasqualität ohnehin eine Methangasmessung erforderlich ist, stellt die Verwendung des Messwerts des Methangehalts als Regelgröße für die Prozessregelung eine besonders effiziente Form der Prozessregelung in der Biomassevergasung dar.

Vorzugsweise befindet sich knapp über der Oxidationszone eine Öffnung, mit deren Hilfe der Biomassevergaser beim Anfahren angezündet werden kann. Dabei wird durch diese Öffnung nicht nur der Anzündvorgang, z. B. durch einen Kohleanzünder, ein Heißluftgebläse, einen Gasanzünder oder ähnliches, realisiert, sondern durch diese Öffnung zieht auch so viel Luft, dass es beim Anzündvorgang zu einer schadstoffarmen Verbrennung der Biomasse kommt. Im Gegensatz zu anderen Verfahren kann das System somit durch eine geruchs- und schadstoffarme Verbrennung der Biomasse beim Anfahren aufgeheizt werden.

Als Vergasungsmittel kann z. B. Luft, Sauerstoff, mit Sauerstoff angereicherte Luft oder Wasserdampf eingesetzt werden.

Das Rohmaterial können Holzhackschnitzel oder eine beliebige andere zerkleinerte, trockene Biomasse sein, z. B. Strauchschnitt oder Restholz.

Das gewonnene Produktgas kann zum Antrieb eines Gasmotors oder einer Gasturbine eingesetzt werden, der/die zum Beispiel einen Generator treibt.

Ausführungsbeispiele eines Biomassevergasers zur Durchführung der Erfindung werden nachfolgend anhand einer Zeichnung erläutert. Es zeigen:
- Fig. 1: ein Prinzipschema eines Biomassevergasers mit senkrecht angeordnetem Vergasungsreaktor;
- Fig. 2: ein Prinzipschema eines Biomassevergasers mit einer Bypassleitung für das Produktgas;
- Fig. 3: ein Prinzipschema eines Biomassevergasers mit geneigt angeordnetem Vergasungsreaktor;
- Fig. 4: ein Prinzipschema des Biomassevergasers aus Fig. 3 mit Maßangaben;
- Fig. 5: Produktgaszusammensetzung in zwei unterschiedlichen Leistungsbereichen des Biomassevergasers im Dauerbetrieb;
- Fig. 6: Produktgasumsatz und Produktgaszusammensetzung beim Übergang zwischen zwei unterschiedlichen Leistungsbereichen.

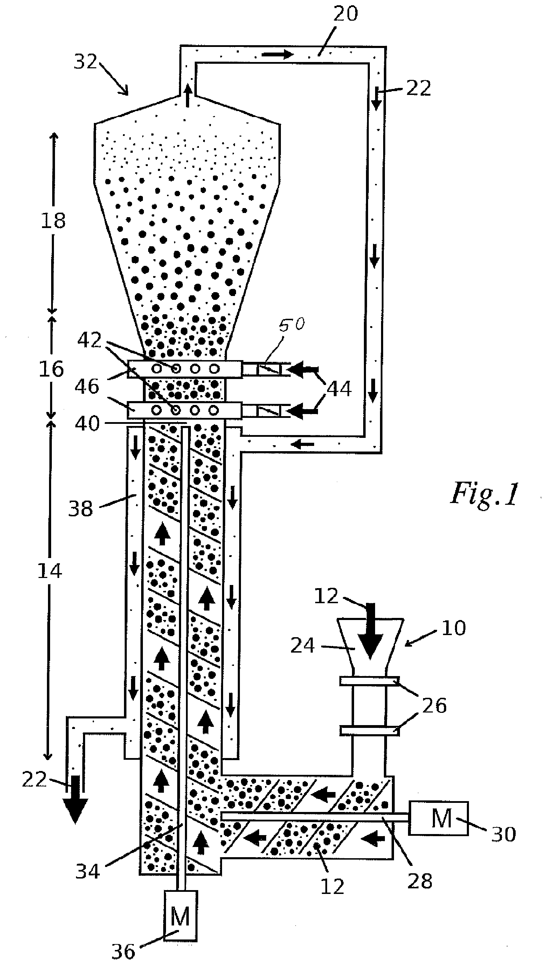

In Figur 1 ist ein Prinzipschema des Biomassevergasers zur Umwandlung von Rohmaterial in Produktgas (Wasserstoff, Kohlenmonoxid) dargestellt. Die nachfolgend beschriebene Vorrichtung eignet sich insbesondere für die Vergasung von Holzhackschnitzel, Pellets oder ähnlicher Biomasse (Strauchschnitt und dergleichen). Der Biomassevergaser besteht im Wesentlichen aus einem Zuführsystem 10 für Holzhackschnitzel 12, einer Pyrolyseeinheit 14, einer Oxidationseinheit 16, einer Reduktionseinheit 18 und einer Ableitung 20 für das Produktgas 22.

Das Zuführsystem 10 besteht aus einem Vorlagebehälter 24, dem die Holzhackschnitzel, Pellets oder ähnliches 12 aufgegeben werden. Über ein Schleusensystem 26, das eine Abdichtung gegenüber der Außenluft sicherstellt, werden die Holzhackschnitzel 12 einer waagrechten Förderschnecke 28 zugeführt, die von einem ersten Motor 30 angetrieben wird. Die waagrechte Förderschnecke 28 fördert die Holzhackschnitzel 12 in den Vergasungsreaktor 32. In dem Vergasungsreaktor 32 sind von unten nach oben die Pyrolyseeinheit 14, die Oxidationseinheit 16 und die Reduktionseinheit 18 direkt aneinander angrenzend angeordnet. Eine senkrechte Förderschnecke oder Pyrolyseschnecke 34, angetrieben von einem zweiten Motor 36, fördert die Holzhackschnitzel 12 durch die Pyrolyseeinheit 14. Im Bereich der Pyrolyseeinheit 14 ist der Mantel 38 des Vergasungsreaktors 32 doppelwandig ausgeführt. Dieser Doppelmantel 38 wird mit dem je nach Betriebszustand und Betriebseinstellung zwischen 600°C und 950°C heißem Produktgas 22 aus der Holzvergasung beaufschlagt, wodurch die benötigte Wärme für die vollständige Pyrolyse der Holzhackschnitzel 12 bereitgestellt wird. Am oberen Ende 40 der senkrechten Förderschnecke 32 werden die Holzhackschnitzel in die Oxidationseinheit 16 gefördert, die sich unmittelbar an die Pyrolyseeinheit anschließt.

Beim Übergang in die Oxidationseinheit 16 ist das Rohmaterial bereits vollständig ausgegast und liegt in zwei Phasen, einer Feststoffphase und einer Gas/Dampfphase, vor. Die Feststoffphase besteht aus ausgegaster Holzkohle. Die Gas/Dampfphase besteht aus den verschiedenen Pyrolysegasen Kohlenmonoxid, Kohlendioxid und Wasserstoff, sowie aus langkettigeren Kohlenwasserstoffen.

Auf Höhe der Oxidationseinheit 16 wird über Öffnungen 42 in der Reaktorwand Umgebungsluft 44 als Vergasungsmittel zugeführt. Die Öffnungen 42 sind in zwei vertikal beabstandeten Ringen 46 angeordnet. Die Luftzufuhr erfolgt dadurch, dass das Produktgas 22 über einen Motor oder einen Saugzug (Gebläse) (nicht gezeigt) abgesaugt wird. Dieses Absaugen führt zu einem Unterdruck im Bereich der Reduktions- 18 und der Oxidationseinheit 16 des Vergasungsreaktors 32, wodurch die Umgebungsluft 44 in die Oxidationseinheit 16 gesaugt wird. Die Zufuhr des Vergasungsmittels wird über Luftklappen 50 gesteuert. Im Regelbetrieb sind die Luftklappen 50 so weit geöffnet, dass das System die benötigte Menge an Umgebungsluft 44 ansaugen kann.

Das Pyrolysegas und die Kohlenwasserstoffe werden unterstöchiometrisch in der Oxidationseinheit 16 teilweise verbrannt. Die dabei entstehende Energie dient dazu, die höhermolekularen Kohlenwasserstoffe zu cracken und liefert darüber hinaus die notwendige Energie, um in der darüberliegenden Reduktionseinheit 18 die Oxidationsprodukte, vor allem Kohlendioxid und Wasser, am Restkohlenstoff (Holzkohle) in die Produktgase Kohlenmonoxid und Wasserstoff zu reduzieren.

Die Reduktionseinheit 18 schließt sich direkt oberhalb an die Oxidationseinheit 16 an. In der Reduktionseinheit 18 erweitert sich der Querschnitt des Vergasungsreaktors 32 nach oben hin konisch unter einem Winkel von etwa 20° auf etwa den vierfachen Durchmesser. Durch die zugeführte Luft 44 und die Verbrennungsgase entsteht eine starke Strömung, so dass sich in der konisch ausgeführten Reduktionseinheit 18 ein Wirbelbett entwickelt. Durch die Aufweitung des Querschnitts im oberen Bereich der Reduktionseinheit 18 wird die Geschwindigkeit der Gase soweit reduziert, dass nur noch wenig Holzkohle aus dem System ausgetragen wird. Leichtere Aschepartikel strömen dagegen mit dem Produktgas 22 ab und werden in einem Staubabscheider (nicht gezeigt) im weiteren Verfahrensablauf abgeschieden.

Am oberen Ende der Reduktionseinheit 18 wird das Produktgas 22 über eine Leitung 20 aus dem Vergasungsreaktor 32 abgeführt. Dabei wird das Produktgas 22 zunächst durch den doppelwandigen Mantel 38 der Pyrolyseeinheit 14 geleitet, um die nötige Wärmeenergie für die vollständige Pyrolyse bereitzustellen.

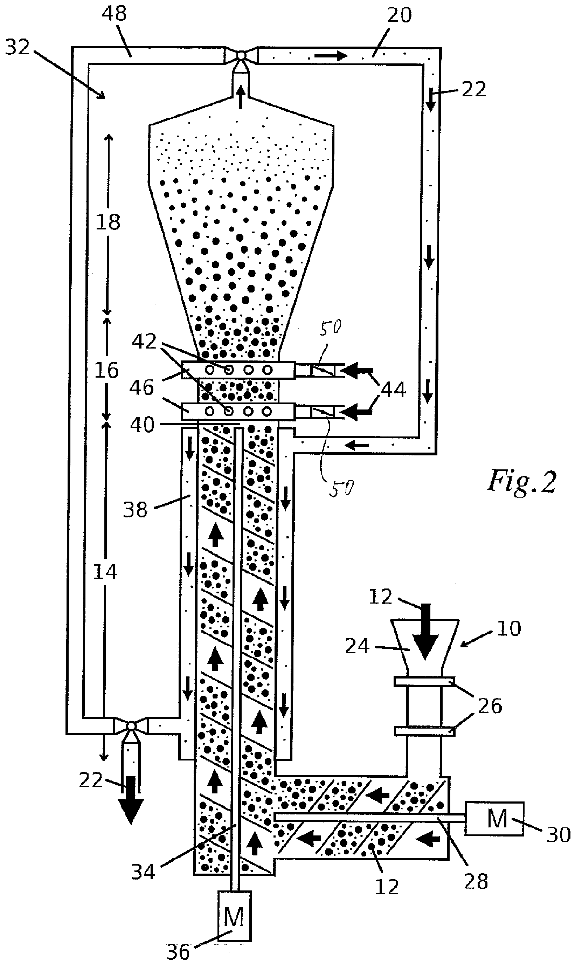

Bei dem Ausführungsbeispiel von Fig. 2 ist die Produktgasleitung 20 mit einer Bypassleitung 48 versehen, über die ein Teil des heißen Produktgases 22 direkt, also ohne zuvor durch die doppelwandig ausgeführte Reaktorwand 38 der Pyrolyseeinheit 14 geführt zu werden, an den Produktgasausgang gefördert werden kann. Dadurch ist es möglich, die Wärmemenge, die an die Pyrolyseeinheit 14 abgegeben werden soll, exakt zu steuern.

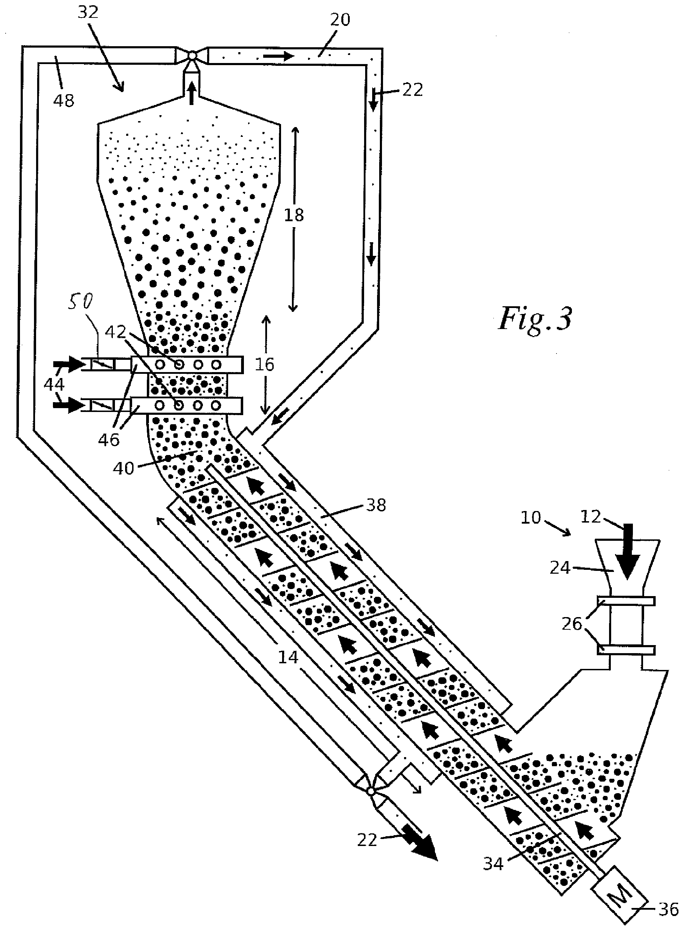

In Figur 3 ist eine weitere Ausführungsform des Biomassevergasers mit Bypassleitung 48 zur Umwandlung von Rohmaterial in Produktgas dargestellt. Die Pyrolyseeinheit 14 des Vergasungsreaktors 32 ist dabei um etwa 45° gegenüber der Horizontalen geneigt angeordnet. Bei dieser Ausführungsform ist es möglich, das Rohmaterial 12 aus dem Vorlagebehälter 24 über das Schleusensystem 26 direkt der Pyrolyseschnecke 28 aufzugeben. Die Pyrolyseschnecke 28 fördert das Rohmaterial dann, wie bei den Ausführungsformen gemäß Figuren 1 und 2, durch die Pyrolyseeinheit 14 zur Oxidationseinheit 16. Auf eine zweite Förderschnecke kann bei dieser Ausführungsform verzichtet werden. In dieser Ausführungsform lässt sich der Biomassevergaser mit einem einfacheren Aufbau und unter Verwendung von weniger Einzelkomponenten verwirklichen.

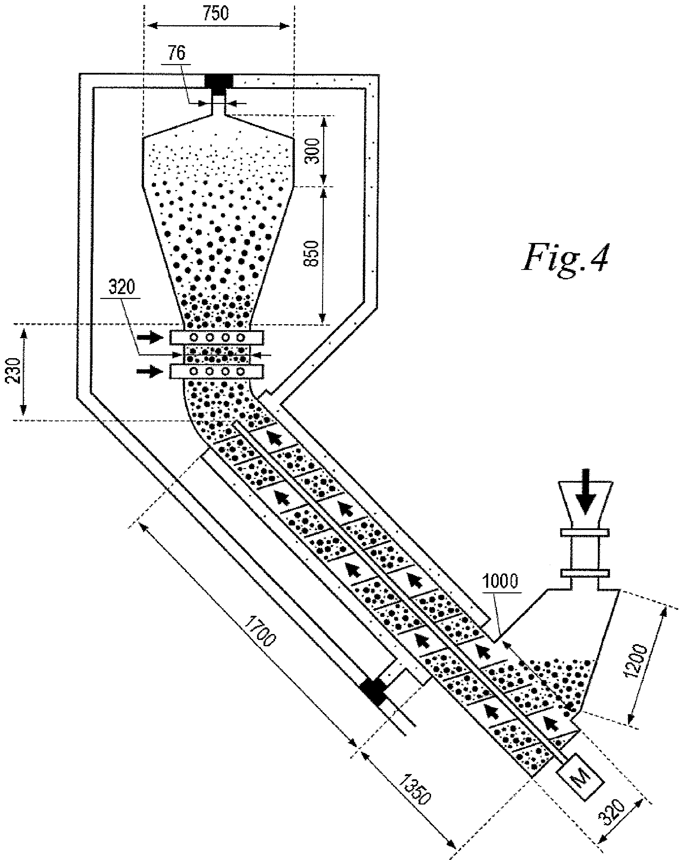

Figur 4 entspricht der Figur drei und ist zusätzlich mit Maßangaben versehen. Die Maße sind dabei in mm angegeben.

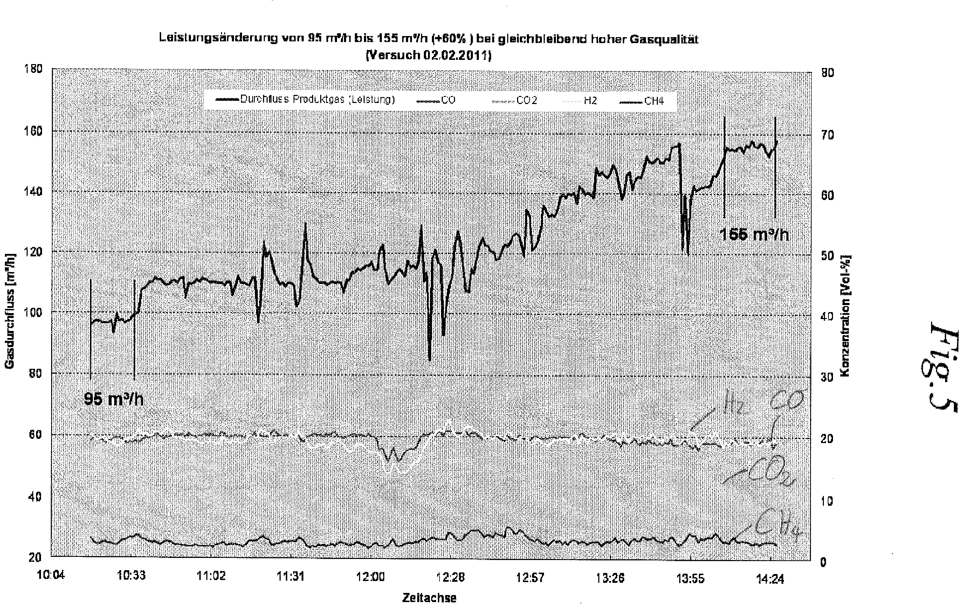

Figur 5 ist ein Diagramm, bei dem der Produktgasumsatz und die Zusammensetzung des Produktgases in zwei unterschiedlichen Leistungsbereichen des Biomassevergasers gegenüber der Zeitachse aufgetragen sind. Die Messdaten wurden über einen Gesamtzeitraum von etwas mehr als 4 Stunden aufgezeichnet. Der Biomassevergaser wurde dabei zunächst auf eine konstante Leistung von 95 m³/h eingestellt und im Dauerbetrieb gefahren (linke Seite des Diagramms). Anschließend wurde die Leistung des Biomassevergasers auf einen Produktgasdurchsatz von 155 m³/h angehoben. Während des Hochfahrens des Biomassevergasers kam es dabei zu Schwankungen beim Gasdurchsatz, da der Versuchsreaktor noch nicht mit einer automatischen Regelung für die Biomassezufuhr ausgerüstet war. Sobald der Biomassevergaser eine Leistung von 155 m³/h erreicht hat, haben sich die Prozesse wieder stabilisiert und der Biomassevergaser erbrachte die gewünschte Leistung konstant.

Die Eigenschaft des Biomassevergasers, ein Produktgas mit gleichbleibend hoher Qualität zu erzeugen, zeigt sich bereits beim Hochfahren der Leistung. In der Übergangsphase, also in dem Zeitabschnitt, in dem die Leistung von 95 m³/h auf 155 m³/h hochgefahren worden ist, bleibt die Gaszusammensetzung trotz der Leistungsschwankungen in weiten Bereichen konstant. Aufgrund dieser konstanten Gaszusammensetzung, kann selbst bei Leistungsschwankungen eine gleichbleibend hohe Gasqualität gewährleistet werden, wodurch der Biomassevergaser besonders dazu geeignet ist in Kombination mit Anlagen, die empfindlich auf Qualitätsschwankungen reagieren, wie z.B. mit Motoren oder Brennstoffzellen, verwendet zu werden.

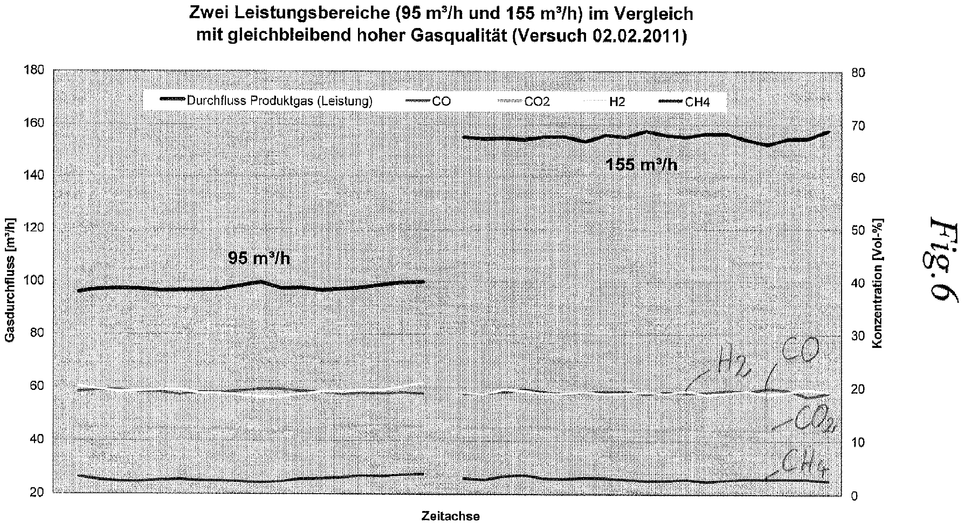

In Figur 6 sind die Dauerbetriebbereiche des Diagramms von Figur 5 detailliert wiedergegeben und zur besseren Vergleichbarkeit direkt nebeneinander dargestellt. Im ersten Dauerbetriebbereich wurde der Biomassevergaser auf eine konstante Leistung von 95 m³/h eingestellt (linke Seite des Diagramms von Figur 6). Wie dem Diagramm zu entnehmen ist, ermöglichte es der Biomassevergaser über den Versuchszeitraum eine konstante Leistung von etwa 95 m³/h Produktgas zu erzeugen. Die Gasqualität war dabei über den Versuchszeitraum konstant und setzte sich aus etwa 20% CO, 20% H₂, 12% CO₂ und 3% Methan zusammen.

Im rechten Bereich des Diagramms von Figur 6 ist der zweite Dauerbetriebbereich aus Figur 5 dargestellt. Auch hier ist festzustellen, dass die eingestellte Leistung von 155 m³/h vom Biomassevergaser konstant geliefert wurde. Insbesondere ist aber festzustellen, dass die Gaszusammensetzung in diesem Leistungsbereich nahezu identisch zur Gaszusammensetzung im ersten Leistungsbereich war. Dies bedeutet, dass der Biomassevergaser dazu in der Lage ist, in unterschiedlichen Leistungsregimes geregelt zu arbeiten und dabei ein Produktgas mit gleichbleibend hoher Gasqualität zu liefern.

**Bezugszeichenliste:**

| | |
|---|---|
| 10 Zuführsystem | 20 Ableitung |
| 12 Rohmaterial (Holzhackschnitzel) | 22 Produktgas |
| 14 Pyrolyseeinheit | 24 Vorlagebehälter |
| 16 Oxidationseinheit | 26 Schleusensystem |
| 18 Reduktionseinheit | 28 waagrechte Förderschnecke |
| 30 erster Motor | 40 oberes Ende der Pyrolyseschnecke |
| 32 Vergasungsreaktor | 42 Öffnungen |
| 34 senkrechte Förderschnecke (Pyrolyseschnecke) | 44 Umgebungsluft |
| | 46 vertikal beabstandete Ringe |
| 36 zweiter Motor | 48 Bypassleitung |
| 38 Mantel des Vergasungsreaktors | 50 Luftklappen |

## Patentansprüche

1. Verfahren zur Vergasung von Biomasse, wobei
die Biomasse als Rohmaterial (12) über eine Zuführeinrichtung (10) in einen Vergasungsreaktor (32) gefördert wird;
der Vergasungsreaktor (32) eine Pyrolyseeinheit (14), eine Oxidationseinheit (16) und eine Reduktionseinheit (18) aufweist;
das Rohmaterial (12) in der Pyrolyseeinheit (14) erhitzt wird, so dass es ausgegast und in die Pyrolyseprodukte umgewandelt wird;
die Pyrolyseprodukte unmittelbar in die Oxidationseinheit (16) gefördert werden, in der sie unter Zuführung eines Vergasungsmittels (44) verbrannt werden;
die Oxidationsprodukte unmittelbar in die Reduktionseinheit (18) gelangen, in der sie in Produktgas (22) umgewandelt werden;
das Produktgas (22) über eine Ableitung (20) aus dem Vergasungsreaktor (32) abgeführt wird; und
das Produktgas (22) zumindest teilweise zur Erhitzung des Rohmaterials (12) in der Pyrolyseeinheit (14) eingesetzt wird;
**dadurch gekennzeichnet, dass**
das Rohmaterial in der Pyrolyseeinheit (14) vollständig ausgegast und in die Pyrolyseprodukte umgewandelt wird, wozu die Pyrolyse bei einer Temperatur im Bereich von 550°C bis 800°C stattfindet.

2. Das Verfahren nach Anspruch 1, wobei die Pyrolyse im Bereich von 650°C bis 750°C stattfindet.

3. Das Verfahren nach einem der vorhergehenden Ansprüche, wobei die für die Pyrolyse benötigte Wärmeenergie ausschließlich dem heißen Produktgas (22) entnommen wird.

4. Das Verfahren nach einem der vorhergehenden Ansprüche, wobei die Leistung des Biomassevergasers (32) durch Absaugen des Produktgases (22) und einer damit automatisch verbundenen Zufuhr an Vergasungsmittel (44), sowie die Rohmaterialzufuhr gesteuert wird.

5. Das Verfahren nach Anspruch 4, wobei die Steuerung der Zufuhr des Vergasungsmittels (44) und/oder des Rohmaterials in Abhängigkeit vom Methangehalt oder in Abhängigkeit vom Kohlendioxidgehalt im Produktgas (22) erfolgt.

6. Das Verfahren nach einem der vorhergehenden Ansprüche, wobei die Oxidation der Pyrolyseprodukte unterstöchiometrisch bei einem Lambdawert im Bereich von λ = 0,15 bis 0,25, bevorzugt bei einem Lambda-Wert von λ = 0,2 erfolgt.

7. Das Verfahren nach einem der vorhergehenden Ansprüche, wobei die Steuerung in der Weise erfolgt, dass eine vorgegebene Menge Produktgas abgezogen wird, die der vorgegebenen Leistung des Biomassevergasers entspricht, und dass die Rohmaterialzufuhr so gesteuert wird, dass sich ein Methangehalt von etwa 3% (oder alternativ ein Kohlendioxidgehalt von 10-12%) im Produktgas ergibt, wobei die Rohmaterialzufuhr erhöht wird wenn der Methangehalt/Kohlendioxidgehalt zu niedrig ist und umgekehrt.

## Claims

1. Method for gasifying biomass, wherein
the biomass as raw material (12) is conveyed into a gasification reactor (32) via a supply device (10);
the gasification reactor (32) has a pyrolysis unit (14), an oxidation unit (16) and a reduction unit (18);
the raw material (12) in the pyrolysis unit (14) is heated, with the result that it is degassed and converted into the pyrolysis products;
the pyrolysis products are conveyed directly into the oxidation unit (16), in which they are burnt while a gasification agent (44) is supplied;
the oxidation products arrive directly in the reduction unit (18), in which they are converted into product gas (22);
the product gas (22) is discharged from the gasification reactor (32) via a discharge pipe (20); and
the product gas (22) is, at least in part, used to heat the raw material (12) in the pyrolysis unit (14);
**characterized in that**
the raw material in the pyrolysis unit (14) is completely degassed and converted into the pyrolysis products, for which the pyrolysis takes place at a temperature in the range of from 550°C to 800°C.

2. Method according to claim 1, wherein the pyrolysis takes place in the range of from 650°C to 750°C.

3. Method according to one of the preceding claims, wherein the heat energy required for the pyrolysis is extracted exclusively from the hot product gas (22).

4. Method according to one of the preceding claims, wherein the output of the biomass gasifier (32) is controlled by suctioning off the product gas (22) and a supply of gasification agent (44) automatically combined therewith, as well as the raw material supply.

5. Method according to claim 4, wherein the supply of the gasification agent (44) and/or of the raw material is controlled as a function of the methane content or as a function of the carbon dioxide content in the product gas (22).

6. Method according to one of the preceding claims, wherein the oxidation of the pyrolysis products is effected substoichiometrically in the case of a lambda value in the range of from λ = 0.15 to 0.25, preferably in the case of a lambda value of λ = 0.2.

7. Method according to one of the preceding claims, wherein the control is effected in such a way that a predefined quantity of product gas is removed, which corresponds to the predefined output of the biomass gasifier, and that the raw material supply is controlled such that a methane content of approximately 3% (or alternatively a carbon dioxide content of 10-12%) in the product gas results, wherein the raw material supply is increased if the methane content/carbon dioxide content is too low, and vice versa.

## Revendications

1. Procédé de gazéification d'une biomasse, où
la biomasse en tant que matière brute (12) est transportée dans un réacteur de gazéification (32) par le biais d'un dispositif d'alimentation (10) ;
le réacteur de gazéification (32) présente une unité de pyrolyse (14), une unité d'oxydation (16) et une unité de réduction (18) ;
la matière brute (12) dans l'unité de pyrolyse (14) est chauffée, ce qui résulte en son dégazage et sa conversion en produits de pyrolyse ;
les produits de pyrolyse sont transportés directement dans l'unité d'oxydation (16), dans laquelle ils sont brûlés tandis qu'un agent de gazéification (44) est fourni ;
les produits d'oxydation arrivent directement dans l'unité de réduction (18), dans laquelle ils sont convertis en un gaz produit (22) ;
le gaz produit (22) est libéré du réacteur de gazéification (32) par le biais d'une conduite de décharge (20) ; et
le gaz produit (22) est, au moins en partie, utilisé pour chauffer la matière brute (12) dans l'unité de pyrolyse (14) ;
**caractérisé en ce que**
la matière brute dans l'unité de pyrolyse (14) est entièrement dégazée et convertie en produits de pyrolyse, pour lesquels la pyrolyse a lieu à une température dans la plage qui va de 550 °C à 800 °C.

2. Procédé selon la revendication 1, où la pyrolyse a lieu dans la plage qui va de 650 °C à 750 °C.

3. Procédé selon l'une des revendications précédentes, où l'énergie thermique requise pour la pyrolyse est extraite exclusivement à partir du gaz produit chaud (22).

4. Procédé selon l'une des revendications précédentes, où le rendement du gazéificateur de biomasse (32) est contrôlé par aspiration du gaz produit (22) et une alimentation en agent de gazéification (44) automatiquement combinée à celle-ci, ainsi que l'alimentation en matière brute.

5. Procédé selon la revendication 4, où l'alimentation en l'agent de gazéification (44) et/ou en la matière brute est régulée en tant que fonction de la teneur en méthane ou fonction de la teneur en dioxyde de carbone dans le gaz produit (22).

6. Procédé selon l'une des revendications précédentes, où l'oxydation des produits de pyrolyse est effectuée à un niveau substoechiométrique dans le cas où une valeur de lambda est dans la plage λ = 0,15 à 0,25, préférablement dans le cas où une valeur de lambda λ = 0,2.

7. Procédé selon l'une des revendications précédentes, où le contrôle est effectué d'une manière telle qu'une quantité prédéfinie de gaz produit est retirée, qui correspond au rendement prédéfini du gazéificateur de biomasse, et telle que l'alimentation en matière brute est régulée de sorte que le gaz produit en résultat a une teneur en méthane qui est approximativement de 3 % (ou sinon une teneur en dioxyde de carbone de 10-12 %), l'alimentation en matière brute étant augmentée si la teneur en méthane/la teneur en dioxyde de carbone est trop basse, et vice-versa.
